(19) Europäisches Patentamt
European Patent Office
Office européen des brevets

(11) EP 4 596 230 A1

(12) EUROPEAN PATENT APPLICATION
published in accordance with Art. 153(4) EPC

(43) Date of publication:
**06.08.2025 Bulletin 2025/32**

(21) Application number: **23872362.1**

(22) Date of filing: **26.09.2023**

(51) International Patent Classification (IPC):
***B32B 5/28*** *(2006.01)* ***B32B 27/28*** *(2006.01)*

(52) Cooperative Patent Classification (CPC):
**B32B 27/12; B32B 5/02; B32B 5/26; B32B 5/28; B32B 7/12; B32B 27/08; B32B 27/18; B32B 27/28; B32B 27/306;** B32B 2250/05; B32B 2250/40; B32B 2260/021; B32B 2260/023; B32B 2260/046; B32B 2262/101; (Cont.)

(86) International application number:
**PCT/JP2023/035001**

(87) International publication number:
**WO 2024/071139 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.09.2022 JP 2022153853**

(71) Applicant: **Mitsubishi Chemical Corporation**
**Tokyo 100-8251 (JP)**

(72) Inventor: **ITO, Takuya**
**Tokyo 100-8251 (JP)**

(74) Representative: **Vossius & Partner**
**Patentanwälte Rechtsanwälte mbB**
**Siebertstrasse 3**
**81675 München (DE)**

# (54) MULTILAYER STRUCTURE AND METHOD FOR PRODUCING SAME, AUTOMOBILE PART, AIRCRAFT PART, AND DAMPING MATERIAL FOR CARBON-FIBER-REINFORCED PLASTIC

(57) The following is provided as a multilayer structure having an excellent damping property: A multilayer structure, including: an ethylene-vinyl alcohol copolymer layer (A); and a carbon-fiber-reinforced plastic layer (B), wherein the ethylene-vinyl alcohol copolymer has a glass transition temperature (Tg) of 0 to 60°C.

EP 4 596 230 A1

(52) Cooperative Patent Classification (CPC): (Cont.)
B32B 2262/106; B32B 2305/08; B32B 2307/558;
B32B 2307/56; B32B 2605/00; B32B 2605/08;
B32B 2605/18

## Description

TECHNICAL FIELD

The present disclosure relates to a multilayer structure and a method for producing the same, an automobile part, an aircraft part, and a damping material for a carbon-fiber-reinforced plastic.

BACKGROUND ART

A carbon-fiber-reinforced plastic (hereinafter, which may be referred to as "CFRP") is a composite material containing a carbon-fiber-reinforcing material and a resin, and widely used for parts of aircrafts, automobiles, marine crafts, and other various transportation devices, sports goods, leisure goods, etc. (see PTL 1, for example).

RELATED ART DOCUMENT

PATENT DOCUMENT

PTL 1: JP-A-2022-091178

SUMMARY

PROBLEM TO BE SOLVED BY THE DISCLOSURE

CFRP is lightweight and highly rigid compared with metals such as aluminum and iron, and thereby has attracted attention as a new material alternative to metals in recent years. However, CFRP has a problem of metallic sound when beaten due to the high rigidity. Thus, improvement of a damping property is required for usage such as a roof of an automobile, for example.

MEANS FOR SOLVING THE PROBLEMS

The present inventor has made earnest study in view of the above circumstances, and consequently found that a multilayer structure with an excellent damping property can be obtained by providing a layer containing a specific ethylene-vinyl alcohol copolymer in a multilayer structure having a carbon-fiber-reinforced plastic layer.

Specifically, the present disclosure provides the following [1] to [12].

[1] A multilayer structure, including: an ethylene-vinyl alcohol copolymer layer (A); and a carbon-fiber-reinforced plastic layer (B), wherein the ethylene-vinyl alcohol copolymer has a glass transition temperature (Tg) of 0 to 60°C.
[2] The multilayer structure according to [1], wherein the glass transition temperature (Tg) of the ethylene-vinyl alcohol copolymer is 0 to 45°C.
[3] The multilayer structure according to [1] or [2], wherein the glass transition temperature (Tg) of the ethylene-vinyl alcohol copolymer is 0 to 30°C.
[4] The multilayer structure according to any one of [1] to [3], wherein the ethylene-vinyl alcohol copolymer is a modified ethylene-vinyl alcohol copolymer having a structural unit represented by the following chemical formula (1),

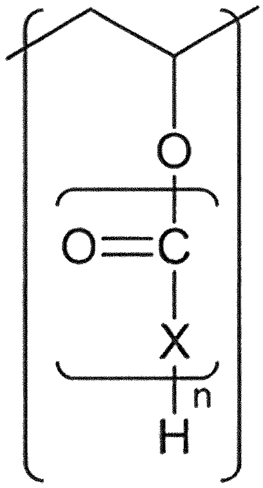

・・・ (1)

wherein X represents an organic chain having a heteroatom, and "n" represents a positive integer.

[5] The multilayer structure according to [4], wherein in the chemical formula (1), the heteroatom of X is an oxygen atom, a nitrogen atom, or a sulfur atom.

[6] The multilayer structure according to [4] or [5], wherein in the chemical formula (1), "n" represents 1 to 20.

[7] The multilayer structure according to any one of [1] to [6], wherein the ethylene-vinyl alcohol copolymer layer (A) is laminated onto at least one surface of the carbon-fiber-reinforced plastic layer (B).

[8] The multilayer structure according to any one of [1] to [7], wherein the multilayer structure is for an automobile part or an aircraft part.

[9] A method for producing a multilayer structure, the method including a step of laminating an ethylene-vinyl alcohol copolymer layer (A) onto at least one surface of a carbon-fiber-reinforced plastic layer (B).

[10] An automobile part, including the multilayer structure according to any one of [1] to [7].

[11] An aircraft part, including the multilayer structure according to any one of [1] to [7].

[12] A damping material for a carbon-fiber-reinforced plastic, including an ethylene-vinyl alcohol copolymer layer, wherein the ethylene-vinyl alcohol copolymer has a glass transition temperature (Tg) of 0 to 60°C.

EFFECTS OF THE DISCLOSURE

The multilayer structure of the present disclosure has an excellent damping property.

EMBODIMENTS OF THE DISCLOSURE

Hereinafter, the present disclosure will be described in detail, and the followings describe an example of desired embodiments.

In the present disclosure, the expression "X to Y", wherein X and Y are given numbers, encompasses a meaning of "preferably greater than X" or "preferably less than Y" unless otherwise specified, in addition to a meaning of "not less than X and not greater than Y".

In the present disclosure, the expression "not less than X", wherein X is a given number, or "not greater than Y", wherein Y is a given number, encompasses a meaning of "preferably greater than X" or "preferably less than Y".

In the present disclosure, the expression "x and/or y", wherein "x" and "y" are given constitutions or components, means three combinations of: only "x"; only "y"; and "x" and "y".

In the present disclosure, the term "(meth)acryl" means "acryl" or "methacryl", the term "(meth)acryloyl" means "acryloyl" or "methacryloyl", and the term "(meth)acrylate" means "acrylate" or "methacrylate".

In the present disclosure, "film" encompasses meanings of "tape" and "sheet".

The multilayer structure of one embodiment of the present disclosure (hereinafter, which may be referred to as "the present multilayer structure") has an ethylene-vinyl alcohol copolymer layer (hereinafter, which may be referred to as "EVOH layer") (A) and a carbon-fiber-reinforced plastic layer (hereinafter, which may be referred to as "CFRP layer") (B).

Hereinafter, each configuration will be described.

EVOH Layer (A)

The EVOH layer (A) contains an ethylene-vinyl alcohol copolymer (hereinafter, which may be referred to as

"EVOH"). Specifically, a content of the EVOH in the EVOH layer (A) is not particularly limited, but the EVOH is preferably a main component (content of not less than 50 mass%). The content of the EVOH is more preferably not less than 60 mass%, further preferably not less than 70 mass%, particularly preferably not less than 80 mass%, most preferably not less than 90 mass%, and may be not less than 95 mass% or 100 mass%.

The EVOH is a resin typically obtained by saponifying an ethylene-vinyl ester copolymer, which is a copolymer of ethylene and a vinyl ester monomer, and is a water-insoluble thermoplastic resin. As the vinyl ester monomer, vinyl acetate is typically used due to low cost.

Ethylene and the vinyl ester monomer may be copolymerized by any known polymerization method such as, for example, solution polymerization, suspension polymerization, and emulsion polymerization, and typically used is solution polymerization with methanol as a solvent. The obtained ethylene-vinyl ester copolymer may be saponified also by a known method.

The EVOH produced as above mainly has an ethylene structural unit and a vinyl alcohol structural unit, and has a small amount of a vinyl ester structural unit remaining as an unsaponified moiety when the saponification degree is less than 100%.

As the vinyl ester monomer, vinyl acetate is typically used as noted above in terms of low cost and in terms of treatment efficiency of impurities in production. Examples of the vinyl ester monomer other than vinyl acetate include: aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters such as vinyl benzoate. These may be used singly or in combination of two or more thereof. Among these, the vinyl ester monomer is preferably an aliphatic vinyl ester having 3 to 20 carbon atoms, more preferably 4 to 10 carbon atoms, and particularly preferably 4 to 7 carbon atoms.

The content of the ethylene structural unit in the EVOH measured based on ISO14663 is typically 20 to 60 mol%, preferably 25 to 55 mol%, and particularly preferably 27 to 55 mol%. The content within the above range can increase adhesiveness to CFRP. This content of the ethylene structural unit may be controlled with a pressure of ethylene in copolymerizing the vinyl ester monomer and ethylene.

The saponification degree of the EVOH measured based on JIS K6726 (in a solution of the EVOH uniformly dissolved in a water/methanol solvent) is typically 90 to 100 mol%, preferably 92 to 100 mol%, and particularly preferably 94 to 100 mol%. If the saponification degree is excessively low, thermal stability, humidity stability, etc. tend to deteriorate. This saponification degree may be controlled with an amount of a saponification catalyst (an alkaline catalyst such as sodium hydroxide is typically used), temperature, time, etc. in saponifying the ethylene-vinyl ester copolymer.

A glass transition temperature (Tg) of the EVOH is typically 0 to 60°C, preferably 0 to 45°C, and particularly preferably 0 to 35°C. An excessively low glass transition temperature tends to easily cause blocking of the formed product. The glass transition temperature may be measured by using a differential scanning calorimeter.

Specifically, the glass transition temperature of the EVOH can be calculated by performing measurement using the differential scanning calorimeter under the following condition.

(a) Adjusting a state of a specimen: A sample was melted at 230°C for 1 minute, and then cooled to -30°C at a cooling rate of 10 °C/min.

(b) Analyzing the glass transition temperature: The sample cooled in (a) was heated at a temperature-raising rate of 10 °C/min to 230°C.

(c) Calculating the glass transition temperature: From a differential scanning calorimetry (DSC) curve obtained in (b), an intermediate-point temperature in a stepwise changed portion of the glass transition was calculated as the glass transition temperature.

A melt flow rate (MFR) of the EVOH (210°C, load: 2160 g) is typically 0.1 to 100 g/10-min, preferably 1 to 50 g/10-min, and particularly preferably 3 to 35 g/10-min. If this MFR is excessively large, film formability tends to be unstable. If this MFR is excessively small, viscosity becomes excessively high and tends to cause difficulty in melting extrusion.

This MFR is an indicator of the polymerization degree of the EVOH, and may be regulated with an amount of a polymerization initiator and an amount of a solvent in copolymerizing ethylene and the vinyl ester monomer.

The EVOH may further have a structural unit derived from a comonomer described below within a range not inhibiting the effect of the present disclosure (for example, not greater than 10 mol% of the EVOH).

Examples of the comonomer include: olefins such as propylene, 1-butene, and isobutene; hydroxy-group-containing $\alpha$-olefins such as 3-buten-1-ol, 3-butene-1,2-diol, 4-penten-1-ol, and 5-hexene-1,2-diol, and derivatives thereof such as esterified compounds and acylated compounds; hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane, and 1,3-dibutylyloxy-2-methylenepropane; unsaturated acids such as acrylic acid, methacrylic acid, crotonic acid, phthalic acid (anhydride), maleic acid (anhydride), and itaconic acid (anhydride), and salt thereof or mono- or dialkylester thereof having an alkyl group having 1 to 18 carbon atoms;

acrylamides such as acrylamide, N-alkylacrylamide having an alkyl group having 1 to 18 carbon atoms, N,N-dimethylacrylamide, 2-acrylamide propanesulfonic acid or salt thereof, acrylamide propyldimethylamine or acid salt thereof or quaternary salt thereof; methacrylamides such as methacrylamide, N-alkylmethacrylamide having an alkyl group having 1 to 18 carbon atoms, N,N-dimethylmethacrylamide, 2-methacrylamide propanesulfonic acid or salt thereof, methacrylamide propyldimethylamine or acid salt thereof or quaternary salt thereof; N-vinylamides such as N-vinylpyrrolidone, N-vinylformamide, and N-vinylacetamide; vinyl cyanides such as acrylonitrile and methacrylonitrile; vinyl ethers such as alkyl vinyl ether, hydroxyalkyl vinyl ether, and alkoxyalkyl vinyl ether, which have an alkyl group having 1 to 18 carbon atoms; vinyl halide compounds such as vinyl chloride, vinylidene chloride, vinyl fluoride, vinylidene fluoride, and vinyl bromide; vinylsilanes such as trimethoxyvinylsilane; allyl acetate; allyl halide compounds such as allyl chloride; allyl alcohols such as allyl alcohol and dimethoxyallyl alcohol; and comonomers such as trimethyl-(3-acrylamide-3-dimethylpropyl)ammonium chloride and acrylamide-2-methylpropanesulfonic acid. These may be used singly or in combination of two or more thereof.

Specifically, EVOH copolymerized with the hydroxy-group-containing $\alpha$-olefins, namely EVOH having a hydroxy group on the side chain, is preferable in terms of good secondary formability while retaining gas-barrier properties. EVOH having a primary hydroxy group on the side chain is more preferable, and EVOH having a 1,2-diol structure on the side chain is particularly preferable.

In the EVOH having a primary hydroxy group on the side chain, a content of a structural unit derived from a monomer having the primary hydroxy group is typically 0.1 to 20 mol%, further preferably 0.5 to 15 mol%, and particularly preferably 1 to 10 mol% in the EVOH.

The EVOH may be a "post-modified" product such as urethanization, acetalization, cyanoethylation, and oxyalkylation.

Further, the EVOH may be a mixture of two or more types of EVOH having, for example, different saponification degrees, different polymerization degrees, different copolymerization components, etc.

The EVOH layer (A) may contain a modified EVOH having a structural unit represented by the following chemical formula (1), which is preferably contained in the main chain of the EVOH.

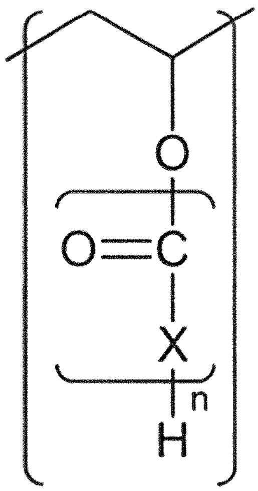 · · · (1)

In the chemical formula (1), X represents an organic chain having a heteroatom, and "n" represents a positive integer.

In the chemical formula (1), X represents an organic chain having a heteroatom. Examples of the heteroatom include an oxygen atom, a nitrogen atom, a sulfur atom, a phosphorus atom, and a silicon atom. Among these, the heteroatom is preferably an oxygen atom, a nitrogen atom, or a sulfur atom, and particularly preferably an oxygen atom from the industrial viewpoint.

From the production viewpoint, X preferably represents an organic chain having "a hydrocarbon chain optionally having a substituent" from the carbonyl group and having "a heteroatom optionally having a substituent at a repeating terminal". As long as X has a heteroatom at at least the repeating terminal from the carbonyl group, X may have another heteroatom.

When the X represents the organic group having "the hydrocarbon chain optionally having a substituent" and "the heteroatom optionally having a substituent at a repeating terminal", and when "the hydrocarbon chain optionally having a substituent" is represented by $R_x$ and "the heteroatom optionally having a substituent at a repeating terminal" is represented by Z, the structural unit is represented as the following chemical formula (2).

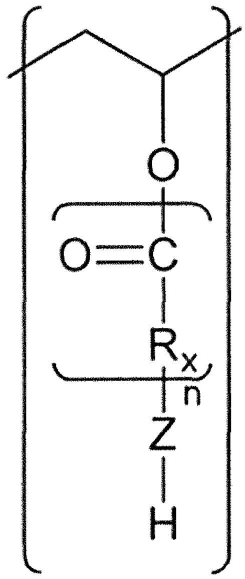

. . . (2)

In the chemical formula (2), Rx represents a hydrocarbon chain having a substituent, Z represents a heteroatom optionally having a substituent, and "n" represents a positive integer.

In the chemical formula (2), examples of the repeating unit include -CO-$R_x$-O- when Z represents an oxygen atom, examples of the repeating unit include -CO-$R_x$-NH- and -CO-$R_x$-$NR^3$- when Z represents a nitrogen atom, and examples of the repeating unit include -CO-$R_x$-S-when Z represents a sulfur atom.

Examples of the hydrocarbon and the substituent that the heteroatom optionally has include: alkyl groups such as methyl group and ethyl group; aryl groups such as aromatic ring; and acyl groups such as acetyl group. That is, $R^3$ in the -CO-$R_x$-$NR^3$- represents alkyl groups such as methyl group and ethyl group, aryl groups such as aromatic ring, or acyl groups such as acetyl group.

Among these, the repeating unit is preferably -CO-$R_x$-O-, CO-$R_x$-NH-, or -CO-$R_x$-S-, and Z particularly preferably represents an oxygen atom from the viewpoint of improvement of the gas barrier property. Specifically, an aliphatic polyester unit represented by the following chemical formula (3) is preferably contained.

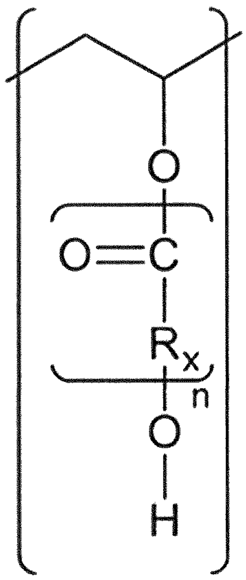

. . . (3)

In the chemical formula (3), Rx represents a hydrocarbon chain optionally having a substituent, and "n" represents a positive integer.

The hydrocarbon chain $R_x$ in the chemical formulae (2) and (3) is preferably a linear or branched chain having 1 to 10 carbon atoms. Examples of the linear or branched hydrocarbon chain having 1 to 10 carbon atoms include methylene group (-$CH_2$-), methyne group (-CHR-), quaternary carbon having no hydrogen atom (-$CR^1R^2$-), propylene group, isopropylene group, butylene group, isobutylene group, and phenylene group. R, $R^1$, and $R^2$ in the methyne group

and the quaternary carbon represent an alkyl group such as methyl group and ethyl group, or an aryl group such as aromatic ring. Among these, the hydrocarbon chain is more preferably a linear or branched alkyl chain having 2 to 8 carbon atoms, and further preferably a liner or branched alkyl chain having 3 to 7 carbon atoms. Among these, the hydrocarbon chain is preferably a linear hydrocarbon chain, further preferably a linear alkyl chain having 2 to 8 carbon atoms, and particularly preferably a linear alkyl chain having 3 to 7 carbon atoms from the viewpoint of improvement of storage stability and process stability of the resin.

In the chemical formulae (1) to (3), "n" represents a positive integer. "n" preferably represents an integer of 1 to 20, and more preferably an integer of 1 to 10. Since an excessively large "n" tends to deteriorate the barrier property, "n" preferably represents an integer of not greater than 20.

When "n" in the chemical formula (1) represents not less than 2, the plurality of X may be same as or different from each other, but are preferably same from the viewpoint of the barrier property. When "n" represents not less than 2 in the chemical formula (2), the plurality of $R_x$ and Z may each be the same as or different from each other, but are preferably the same from the viewpoint of the barrier property. When "n" represents not less than 2 in the chemical formula (3), the plurality of $R_x$ may be the same as or different from each other, but are preferably the same from the viewpoint of the barrier property.

In the modified EVOH, an average value of "n" in the chemical formulae (1) to (3) (that is, the average value may be referred to as "average chain length of the grafted chain") is each preferably within a range of 1 to 10, more preferably within a range of 1 to 5, further preferably within a range of 1 to 2, and particularly preferably within a range of 1 to 1.5. Since an excessively large average value of "n" tends to increase variation of the chain lengths of the grafted chain and consequently deteriorate the gas barrier property, "n" preferably represents not greater than 10.

The structural unit represented by the chemical formulae (1) to (3) can be identified by common organochemical techniques such as, for example, nuclear magnetic resonance spectrometry (NMR), infrared spectrometry, and mass spectrometry.

The average chain length of the grafted chain in the chemical formulae (1) to (3) in the modified EVOH can be calculated from measurement results by $^1$H-NMR.

Method for Producing Modified EVOH

The modified EVOH having the structural unit represented by the chemical formula (1) in the main chain can be obtained by, for example, a graft reaction in which the EVOH and a compound having a hetero-functional group are heated and stirred in a state of the melted EVOH in a stirring-vessel-type producing apparatus having a stirring blade, or using an extruder or a shearing-forming processing machine equipped with a returning-type screw.

The repeating unit composed of the chemical formula (1) contained in the main chain of the modified EVOH, namely a side-chain-grafted structure by the graft reaction, is formed with the hydroxy group of the EVOH as an initiation terminal.

Compound Having Hetero-Functional Group

The hetero-functional group refers to a functional group having a heteroatom. Examples of the heteroatom include an oxygen atom, a nitrogen atom, a sulfur atom, a phosphorus atom, and a silicon atom, and among these, an oxygen atom, a nitrogen atom, and a sulfur atom are preferable. Specific examples of the functional group having a heteroatom (hetero-functional group) include an ester group, a carboxylic acid group, an acyl group, a thioester group, an amide group, a carbonate group, a carbamate group, a thiocarbamate group, a carbamide group, an N-acyl group, and an N,N'-diacyl group.

Examples of the compound having the hetero-functional group include cyclic compounds having the hetero-functional group, carboxylic acid compounds, carbonate compounds, carbamate compounds, thiocarbamate compounds, diacyl compounds, triacyl compounds, and analogs thereof. These may be used singly, or in combination of two or more thereof. Among these, cyclic compounds having the hetero-functional group are preferable.

Cyclic Compound Having Hetero-Functional Group

The cyclic compound having the hetero-functional group is preferably a heterocyclic compound having not less than 2 carbon atoms. Examples of the cyclic compound having the hetero-functional group include: cyclic esters such as lactones; cyclic amides such as lactams; cyclic carbonates such as ethylene carbonate and propylene carbonate; cyclic thioesters such as thietan-2-one, 3,3-dimethylthietan-2-one, 4-methylthietan-2-one, 3-methylthietan-2-one, 3-ethylthietan-2-one, and 3-methyl-3-ethylthietan-2-one; cyclic carbamates such as ethylene carbamate; imide compounds such as phenyl phthalimide and cyclohexane dicarboxyimide; cyclic urea derivatives such as N,N'-dimethylpropyleneurea and 1,3-dimethyl-2-imidazolidinone; and cyclic N,N'-diacyl compounds such as N-acyl-substituted caprolactam. Among

these, cyclic esters are preferable, and lactones are more preferable.

As the modified EVOH, an aliphatic-polyester-modified EVOH is particularly preferably used. The aliphatic-polyester-modified EVOH refers to an EVOH having an aliphatic polyester unit.

A method for obtaining the aliphatic-polyester-modified EVOH will be described.

Examples of the method for obtaining the aliphatic-polyester-modified EVOH include: (1) a method of ring-opening polymerizing lactones in the presence of the EVOH; and (2) a method of subjecting aliphatic polyesters or lactones to a ring-opening polymerization or a condensing-polymerization reaction to obtain a polyester having a carboxy group at the terminal, and then reacting this polyester having a carboxy group at the terminal and the EVOH.

Among these, the method of ring-opening polymerizing lactones in the presence of the EVOH, which is performed in fewer steps than the method of generating the aliphatic polyester by a ring-opening polymerization and a condensing-polymerization reaction in advance and then reacting with the EVOH, is convenient and preferable because the resin in which the aliphatic polyester is grafted to the EVOH can be easily obtained in a single-step reaction.

The lactones are preferably lactones having 3 to 10 carbon atoms constituting the ring of forming the aliphatic polyester with the ring-opening polymerization. Such lactones are represented by the following chemical formula (4) when having no substituent.

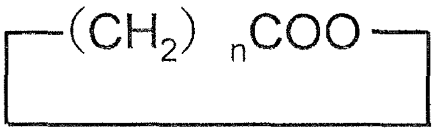
· · · (4)

In the chemical formula (4), "n" represents an integer of 2 to 9, and "n" preferably represents 4 to 5. Any of carbon atoms in the alkylene chain $-(CH_2)_n-$ in the chemical formula (4) may have at least one substituent such as a lower alkyl group and lower alkoxy group having about 1 to 8 carbon atoms, a cycloalkyl group, a phenyl group, and an aralkyl group.

Specific examples of such lactones include β-propiolactones, γ-butyrolactones, ε-caprolactones, and δ-valerolactones.

Examples of the β-propiolactones include β-propiolactone and dimethylpropiolactone.

Examples of the γ-butyrolactones include butyrolactone, γ-valerolactone, γ-caprolactone, γ-caprylolactone, γ-laurolactone, γ-palmitolactone, γ-stearolactone, crotonolactone, α-angelicalactone, and β-angelicalactone.

Examples of the ε-caprolactones include: ε-caprolactone; monoalkyl-ε-caprolactones such as monomethyl-ε-caprolactone, monoethyl-ε-caprolactone, monodecyl-ε-caprolactone, and monopropyl-ε-caprolactone; dialkyl-ε-caprolactones substituted with two alkyl groups at carbon atoms other than the ε-position; trialkyl-ε-caprolactones substituted with three alkyl groups at carbon atoms other than the ε-position; alkoxy-ε-caprolactones such as ethoxy-ε-caprolactone; cycloalkyllactones such as cyclohexyl-ε-caprolactone; aralkyl-ε-caprolactones such as benzyl-ε-caprolactone; and aryl-ε-caprolactones such as phenyl-ε-caprolactone.

Examples of the δ-valerolactones include 5-valerolactone, 3-methyl-5-valerolactone, 3,3-dimethyl-5-valerolactone, 2-methyl-5-valerolactone, and 3-ethyl-5-valerolactone.

These lactones may be used singly or in combination.

Among these, ε-caprolactones and δ-valerolactones are particularly preferable, and in terms of inexpensive and easy availability, ε-caprolactone is still particularly preferable.

Carboxylic Acid Compound

Examples of the carboxylic acid compound include linear carboxylate esters, linear carboxylate thioesters, linear carboxamides, and acyl halides of carboxylic acid or anhydride. Among these, linear carboxylate ester is preferable.

Carbonate Compound

Examples of the carbonate compound include various dialkyl carbonates, diaryl carbonates, and aryl alkyl carbonates.

Carbamate Compound

Examples of the carbamate compound include methylcarbamate and ethylcarbamate.

Thiocarbamate Compound

Examples of the thiocarbamate compound include derivatives such as dimethylamino-S-arylthiocarbamate.

Diacyl Compound

Examples of the diacyl compound include diacetamide and diacetyl(cyclopentyl)azane.

Triacyl Compound

Examples of the triacyl compound include triacetamide and tribenzamide.

In addition, an oligomer or polymer of the repeating structural unit represented by "n" in the chemical formulae (1) to (3) may also be used as the compound having the hetero-functional group. For example, polyesters such as poly-ε-caprolactone and polylactic acid, polyamides such as poly-ε-caprolactam, or polythioesters may be used.

As noted above, the modified EVOH having the structural unit represented by the chemical formula (1) can be produced by: heating and stirring the EVOH and the compound having the hetero-functional group in a state of melted EVOH in a stirring-vessel-type producing apparatus having a stirring blade; or performing a graft reaction by using an extruder or a shearing-molding processing machine equipped with a returning-type screw.

For example, when the cyclic compound having the hetero-functional group is used as the compound having the hetero-functional group, the modified EVOH having the structural unit represented by the chemical formula (1) in the main chain can be produced by a ring-opening polymerization reaction and a graft reaction of the cyclic compound having the hetero-functional group in the presence of the EVOH. Meanwhile, when the carboxylic acid compound is used as the compound having the hetero-functional group, the modified EVOH having the structural unit represented by the chemical formula (1) in the main chain can be produced by a nucleophilic substitution reaction or a dehydration condensation reaction and a graft reaction of the carboxylic acid compound in the presence of the EVOH.

Among these, the modified EVOH is preferably a ring-opened polymer of a lactone ring having 3 to 10 carbon atoms constituting the ring.

In a case of the reaction with the ring-opening polymerization, a conventionally known ring-opening polymerization catalyst is preferably added. Examples of the ring-opening polymerization catalyst include titanium compounds and tin compounds. Specific examples thereof include: titanium alkoxides such as tetra-n-butoxytitanium, tetraisobutoxytitanium, and tetraisopropoxytitanium; tin alkoxides such as dibutyldibutoxytin; and tin ester compounds such as tin 2-ethylhexanoate and dibutyltin diacetate. These may be used singly or in combination of two or more thereof. Among these, tetra-n-butoxytitanium and tin 2-ethylhexanoate are preferable in terms of inexpensive and easy availability.

The above reactions can also be performed in a heating and melting state in a kneading apparatus such as monoaxial and biaxial extruders, a Banbury mixer, a kneader, and a Brabender.

A reaction time and temperature in the ring-opening polymerization are not particularly limited, and may be appropriately selected. The ring-opening polymerization is performed with stirring at preferably 50 to 250°C for 10 seconds to 24 hours, and more preferably at 150 to 230°C for 50 seconds to 10 hours. An excessively shorter reaction time than the lower limit or an excessively lower reaction temperature than the lower limit tends to cause bleeding out of an unreacted compound from the formed article due to the decreased reaction rate, leading to deterioration of surface appearance. An excessively longer reaction time than the upper limit or an excessively higher reaction temperature than the upper limit tends to cause crosslinking between the modified EVOH, thereby generating an appearance failure of the formed article such as fish eye.

In the modified EVOH obtained as above, a content of the EVOH unit forming the main chain of the modified EVOH is typically 40 to 99 mass%, preferably 45 to 95 mass%, and particularly preferably 50 to 90 mass%. A content of the structural unit grafted with the main chain and represented by any one of the chemical formulae (1) to (3) is typically 1 to 60 mass%, preferably 5 to 55 mass%, and particularly preferably 10 to 50 mass%. The content of the EVOH unit and the content of the structural unit represented by any one of the chemical formulae (1) to (3) in the modified EVOH can be calculated from the measurement results by $^1$H-NMR.

A number-average molecular weight (in terms of standard polystyrene measured by GPC) of the modified EVOH is typically 5,000 to 300,000, preferably 10,000 to 200,000, and particularly preferably 10,000 to 100,000. If the number-average molecular weight of the modified EVOH is excessively high, its melting viscosity tends to become excessively high. Meanwhile, if the number-average molecular weight is excessively low, its melting viscosity tends to become excessively low, thereby causing difficulty in stable melt-formation. The number-average molecular weight of the modified EVOH can be calculated from measurement results by GPC.

The modification rate of the modified EVOH is typically 0.1 to 30 mol%, furthermore preferably 1 to 25 mol%, and particularly preferably 5 to 20 mol%. The modification rate can be calculated from measurement results by $^1$H-NMR.

An average value of "n" (that is, an average chain length of the grafted chain) in the chemical formulae (1) to (3) of the modified EVOH is typically 1 to 15, preferably 1 to 10, and particularly preferably 1 to 8. If the average chain length of the grafted chain is excessively long, adhesiveness tends to become strong, thereby causing blocking of the formed article. The average chain length can be calculated from measurement results by $^1$H-NMR.

Specifically, the modification rate and the average chain length of the grafted chain of the modified EVOH can be

calculated by $^1$H-NMR measurement under the following conditions.

(a) $^1$H-NMR Measurement Condition

- Internal standard substance: Tetramethylsilane
- Solvent: d6-DMSO
- Concentration of measured polymer: 5 mass% (sample: 0.1 g, solvent: 2 mL)
- Measurement temperature: 50°C (323 K)
- Irradiation pulse: 45° pulse
- Pulse interval: 10 sec
- Time of integration: 16

(b) Attribution of Resonance Absorption Peak

(I) 0.8 to 0.9 ppm: $-CH_3$ of the modified EVOH terminal
(II) 1.0 to 1.9 ppm: $-CH_2-$ of the modified EVOH main chain; and $-CH_2-$ adjacent to each other in the grafted chain
(III) 2.0 ppm: $-CH_3$ of a remained acetyl group of the modified EVOH
(IV) 2.1 to 2.3 ppm: $-CH_2-$ adjacent to the carboxy group of the grafted chain
(V) 3.3 to 4.0 ppm: -CH- adjacent to -OH of the modified EVOH; and $-CH_2-$ adjacent to -OH of the grafted chain
(VI) 4.0 to 4.7 ppm: -OH of the modified EVOH and the grafted chain; and $-CH_2-$ adjacent to the ester bond of the grafted chain (c) Calculation of Modification Rate and Average Chain Length of Grafted Chain

By using an integrated value of each of the resonance absorption peaks (I) to (VI), the following simultaneous equations (i) to (vii) are formed to calculate an amount of the modification groups C (mol) and the average chain length "n" (mol) of the grafted chain from solutions of the simultaneous equations. Furthermore, the modification rate X (mol%) is calculated from the equation (vii).

$$\text{Equation (i): } 3\times M = [\text{Integrated value of peak (I)}]$$

$$(2\times M)+(2\times A)+(4\times E)+(2\times O)+(6\times n+2)\times C = [\text{Integrated value of peak (II)}] \quad \text{Equation (ii):}$$

$$\text{Equation (iii): } 3\times A = [\text{Integrated value of peak (III)}]$$

$$\text{Equation (iv): } 2\times n\times C = [\text{Integrated value of peak (IV)}]$$

$$\text{Equation (v): } O+(2\times C) = [\text{Integrated value of peak (V)}]$$

$$\text{Equation (vi): } O+(2\times n-1)\times C = [\text{Integrated value of peak (VI)}]$$

$$\text{Equation (vii): } X = C/(M+A+O+C+E)\times 100$$

Here, M, A, O, C, n, E, and X represent the following values.

M: Amount (mol) of terminal methyl groups of the modified EVOH
A: Amount (mol) of acetyl groups of the modified EVOH
O: Amount (mol) of hydroxy groups of the modified EVOH
C: Amount (mol) of modification groups of the modified EVOH
n: Average chain length (numbers) of the grafted chains

E: Amount (mol) of ethylene groups of the modified EVOH
X: Modification rate (mol%) of the modified EVOH

A glass transition temperature (Tg) of the modified EVOH is typically -50 to 60°C, preferably -30 to 45°C, and particularly preferably -10 to 35°C. If the glass transition temperature is excessively low, blocking of the formed article tends to be likely to occur. The glass transition temperature can be measured by using a differential scanning calorimeter.
A content of the modified EVOH in the EVOH layer (A) is not particularly limited, but the modified EVOH is preferably a main component (at not less than 50 mass%). The content of the modified EVOH is more preferably not less than 60 mass%, further preferably not less than 70 mass%, particularly preferably not less than 80 mass%, most preferably not less than 90 mass%, and may be not less than 95 mass% or 100 mass%.

CFRP Layer (B)

The CFRP layer (B) contains CFRP.
CFRP is, for example, a sheet-shaped carbon fiber aggregate impregnated with a thermosetting resin, a UV-curable resin, and/or a thermoplastic resin, and the impregnation resin is cured. Examples of the sheet-shaped carbon fiber aggregate impregnated with the resin include: aggregate composed one sheet (prepreg); and a multilayer structure in which a plurality of prepregs are laminated and then integrated by a heat-pressing method etc. A thickness of the one sheet-shaped carbon fiber aggregate (prepreg) is not particularly limited, but preferably not greater than 0.5 mm. When CFRP is the multilayer structure composed of the plurality of the prepregs, the thickness may be regulated according to the usage.
As the carbon fiber aggregate, fabrics (such as plainly woven fabrics, twill-woven fabrics, and satin-woven fabrics) composed of carbon fiber group, non-woven fabrics composed of the carbon fiber group, or a material in which the carbon fiber group is arranged in one direction may be used, for example. The carbon fiber group means carbon fibers at an amount (a number of fibers) required for forming each of the carbon fiber aggregate. The carbon fiber is not particularly limited, and for example, PAN carbon fiber, pitch carbon fiber, rayon carbon fiber, etc. may be used.
In some examples, the thermosetting resin or the UV-curable resin in CFRP covers the surface of the carbon fiber aggregate, and is cured in a state of entering a space in the carbon fiber. As the thermosetting resin, those used in a known CFRP may be used. For example, a resin selected from epoxy resin, unsaturated polyester resin, vinyl ester resin, phenol resin, cyanate ester resin, and polyimide resin may be used. These resins may be used singly or in combination of two or more thereof.
As the UV-curable resin, a material selected from monomers, oligomers, or a mixture thereof for the UV-curable resin may be used. In some embodiments, a material selected from the following radically polymerizable monomers and oligomers of the radically polymerizable monomer, a material selected from cationically polymerizable monomers and oligomers of the cationically polymerizable monomers, and a material selected from a mixture of two or more of these monomers and oligomers may be used as the UV-curable resin.

(Radically Polymerizable Monomer)

Examples of the radically polymerizable compound include compounds having one or more radically polymerizable groups such as a (meth)acryloyl group, a (meth)acryloyloxy group, a (meth)acryloylamino group, a vinyl ether group, a vinylaryl group, a vinyloxycarbonyl group in one molecule.
Examples of the compound having one or more (meth)acryloyl groups in one molecule include 1-buten-3-one, 1-penten-3-one, 1-hexen-3-one, 4-phenyl-1-buten-3-one, 5-phenyl-1-penten-3-one, and derivatives thereof.
Examples of the compound having one or more (meth)acryloyloxy groups in one molecule include methyl (meth)acrylate, ethyl (meth)acrylate, n-butyl (meth)acrylate, isobutyl (meth)acrylate, t-butyl (meth)acrylate, n-hexyl (meth)acrylate, n-ethylhexyl (meth)acrylate, isodecyl (meth)acrylate, n-lauryl (meth)acrylate, n-stearyl (meth)acrylate, n-butoxyethyl (meth)acrylate, butoxy diethylene glycol (meth)acrylate, methoxy triethylene glycol (meth)acrylate, methoxy polyethylene glycol (meth)acrylate, cyclohexyl (meth)acrylate, tetrahydrofurfuryl (meth)acrylate, benzyl (meth)acrylate, phenoxyethyl (meth)acrylate, isobornyl (meth)acrylate, 2-hydroxyethyl (meth)acrylate, 2-hydroxypropyl (meth)acrylate, 2-hydroxybutyl (meth)acrylate, dimethylaminoethyl (meth)acrylate, diethylaminoethyl (meth)acrylate, acrylic acid, methacrylic acid, 2-(meth)acryloyloxyethylsuccinic acid, 2-(meth)acryloyloxyethylhexahydrophthalic acid, 2-(meth)acryloyloxyethyl 2-hydroxypropylphthalate, glycidyl (meth)acrylate, 2-(meth)acryloyloxyethyl acid phosphate, ethylene glycol di(meth)acrylate, diethylene glycol di(meth)acrylate, triethylene glycol di(meth)acrylate, 1,4-butanediol di(meth)acrylate, neopentyl glycol di(meth)acrylate, 1,6-hexanediol di(meth)acrylate, 1,9-nonanediol di(meth)acrylate, 1,10-decanediol di(meth)acrylate, decane di(meth)acrylate, glycerol di(meth)acrylate, 2-hydroxy-3-(meth)acryloyloxypropyl (meth)acrylate, dimethyloltricyclodecane di(meth)acrylate, trifluoroethyl (meth)acrylate, perfluorooctylethyl (meth)acrylate, isoamyl (meth)acrylate, isomyristyl (meth)acrylate, γ-(meth)acryloyloxypropyltrimethoxysilane, 2-(meth)acryloxyethyl isocyanate, 1,1-bis(acryloyloxy)ethyl isocyanate, 2-(2-(meth)acryloyloxyethyloxy)ethyl isocyanate, 3-(meth)acryloyloxypropyltriethoxysilane, and derivatives thereof.

Examples of the compound having one or more (meth)acryloylamino groups in one molecule include 4-(meth)acryloylmorpholine, N,N-dimethyl(meth)acrylamide, N,N-diethyl(meth)acrylamide, N-methyl(meth)acrylamide, N-ethyl(meth)acrylamide, N-propyl(meth)acrylamide, N-isopropyl(meth)acrylamide, N-butyl(meth)acrylamide, N-n-butoxymethyl(meth)acrylamide, N-hexyl(meth)acrylamide, N-octyl(meth)acrylamide, and derivatives thereof.

Examples of the compounds having one or more vinyl ether groups in one molecule include 3,3-bis(vinyloxymethyl)oxetane, 2-hydroxyethyl vinyl ether, 3-hydroxypropyl vinyl ether, 2-hydroxypropyl vinyl ether, 2-hydroxyisopropyl vinyl ether, 4-hydroxybutyl vinyl ether, 3-hydroxybutyl vinyl ether, 2-hydroxybutyl vinyl ether, 3-hydroxyisobutyl vinyl ether, 2-hydroxyisobutyl vinyl ether, 1-methyl-3-hydroxypropyl vinyl ether, 1-methyl-2-hydroxypropyl vinyl ether, 1-hydroxymethylpropyl vinyl ether, 4-hydroxycyclohexyl vinyl ether, 1,6-hexanediol monovinyl ether, 1,4-cyclohexanedimethanol monovinyl ether, 1,3-cyclohexanedimethanol monovinyl ether, 1,2-cyclohexanedimethanol monovinyl ether, p-xylene glycol monovinyl ether, m-xylene glycol monovinyl ether, o-xylene glycol monovinyl ether, diethylene glycol monovinyl ether, triethylene glycol monovinyl ether, tetraethylene glycol monovinyl ether, pentaethylene glycol monovinyl ether, oligoethylene glycol monovinyl ether, polyethylene glycol monovinyl ether, dipropylene glycol monovinyl ether, tripropylene glycol monovinyl ether, tetrapropylene glycol monovinyl ether, pentapropylene glycol monovinyl ether, oligopropylene glycol monovinyl ether, polypropylene glycol monovinyl ether, and derivatives thereof.

Examples of the compounds having one or more vinylaryl groups in one molecule include styrene, divinylbenzene, methoxystyrene, ethoxystyrene, hydroxystyrene, vinylnaphthalene, vinylanthracene, 4-vinylphenyl acetate, (4-vinylphenyl)dihydroxyborane, N-(4-vinylphenyl)maleimide, and derivatives thereof.

Examples of the compounds having one or more vinyloxycarbonyl groups in one molecule include isopropenyl formate, isopropenyl acetate, isopropenyl propionate, isopropenyl butylate, isopropenyl isobutyrate, isopropenyl caproate, isopropenyl valerate, isopropenyl isovalerate, isopropenyl lactate, vinyl acetate, vinyl propionate, vinyl butyrate, vinyl caproate, vinyl caprylate, vinyl laurate, vinyl myristate, vinyl palmitate, vinyl stearate, vinyl cyclohexanecarboxylate, vinyl pivalate, vinyl octylate, vinyl monochloroacetate, divinyl adipate, vinyl acrylate, vinyl methacrylate, vinyl crotonate, vinyl sorbate, vinyl benzoate, vinyl cinnamate, and derivatives thereof.

(Cationically Polymerizable Monomer)

Examples of the cationically polymerizable monomer include compounds having one or more cationically polymerizable groups such as an epoxy ring (oxiranyl group), a vinyl ether group, a vinylaryl group, and an oxetanyl group in one molecule.

Examples of the compound having one or more epoxy rings in one molecule include: glycidyl methyl ether, bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resin, hydrogenated bisphenol A diglycidyl ether, hydrogenated bisphenol F diglycidyl ether, hydrogenated bisphenol S diglycidyl ether, 3,4-epoxycyclohexylmethyl (3,4-epoxy)cyclohexanecarboxylate, 2-(3,4-epoxycyclohexyl-5,5-spiro-3,4-epoxy)cyclohexane-meta-dioxane, bis(3,4-epoxycyclohexylmethyl) adipate, bis(3,4-epoxy-6-methylcyclohexylmethyl) adipate, 3,4-epoxy-6-methylcyclohexyl 3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylene bis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, and polypropylene glycol diglycidyl ethers; polyglycidyl ethers of a polyether polyol obtained by adding one or two or more types of alkylene oxide into an aliphatic polyhydric alcohol such as ethylene glycol, propylene glycol, and glycerol; diglycidyl ethers of an aliphatic long-chain dibasic acid; monoglycidyl ethers of an aliphatic higher alcohol; monoglycidyl ethers of phenol, cresol, butylphenol, or a polyether alcohol obtained by adding an alkylene oxide into these; and glycidyl esters of a higher fatty acid.

Examples of the compound having one or more vinyl ether groups in one molecule and the compounds having one or more vinylaryl groups in one molecule include compounds same as the compounds exemplified as the radically polymerizable compound.

Examples of the compound having one or more oxetanyl groups in one molecule include trimethylene oxide, 3,3-bis(vinyloxymethyl)oxetane, 3-ethyl-3-hydroxymethyloxetane, 3-ethyl-3-(2-ethylhexyloxymethyl)oxetane, 3-ethyl-3-(hydroxymethyl)oxetane, 3-ethyl-3-[(phenoxy)methyl]oxetane, 3-ethyl-3-(hexyloxymethyl)oxetane, 3-ethyl-3-(chloromethyl)oxetane, 3,3-bis(chloromethyl)oxetane, 1,4-bis[(3-ethyl-3-oxetanylmethoxy)methyl]benzene, bis{[1-ethyl-(3-oxetanyl)]methyl} ether, 4,4'-bis[(3-ethyl-3-oxetanyl)methoxymethyl]bicyclohexyl, 1,4-bis[(3-ethyl-3-oxetanyl)methoxymethyl]cyclohexane, and 3-ethyl-3-{[(3-ethyloxetan-3-yl)methoxy]methyl}oxetane.

Examples of oligomers of the radically polymerizable monomer and the cationically polymerizable monomer include monofunctional or polyfunctional (meth)acrylic oligomers, and one or two or more thereof may be used in

combination. Examples of the monofunctional or polyfunctional (meth)acrylic oligomers include urethane (meth)acrylate oligomers, epoxy (meth)acrylate oligomers, polyether (meth)acrylate oligomers, and polyester (meth)acrylate oligomers.

Examples of the urethane (meth)acrylate oligomers include polycarbonate urethane (meth)acrylate, polyester urethane (meth)acrylate, polyether urethane (meth)acrylate, and caprolactone urethane (meth)acrylate. The urethane (meth)acrylate oligomer is obtained by a reaction between: an isocyanate compound obtained by reacting a polyol and a diisocyanate; and a (meth)acrylate monomer having a hydroxy group. Examples of the polyol include polycarbonate diol, polyester polyol, polyether polyol, and polycaprolactone polyol.

The epoxy(meth)acrylate oligomer is obtained by, for example, an esterification reaction between: an oxirane ring of a low-molecular-weight bisphenol epoxy resin or novolac epoxy resin; and an acrylic acid. The polyether (meth) acrylate oligomer is obtained by obtaining a polyether oligomer having a hydroxy group on both the terminals by a dehydrative condensation reaction of a polyol, and then esterifying the hydroxy group on both the terminals with acrylic acid. The polyester (meth)acrylate oligomer is obtained by, for example, obtaining a polyester oligomer having a hydroxy group on both the terminals by condensing a polycarboxylic acid and a polyol, and then esterifying the hydroxy group on both the terminals with acrylic acid.

A weight-average molecular weight of the monofunctional or polyfunctional (meth)acrylic oligomer is preferably, for example, not greater than 100000, or 500 to 50000 in one preferable aspect of the present disclosure.

When the aforementioned monomer, oligomer, or mixture thereof is used, 0.01 to 10 parts by mass of a photopolymerization initiator relative to 100 parts by mass of the monomer, the oligomer, or the mixture thereof may be used in one preferable aspect of the present disclosure.

For the thermoplastic resin, a known thermoplastic resin may be appropriately selected according to the usage, and the thermoplastic resin may contain a thermoplastic elastomer, for example. Examples of the thermoplastic resin include polyamide resin (aliphatic polyamide such as PA6 and PA66, and aromatic polyamide), copolymers having a styrene unit such as polystyrene, ABS resin, and AS resin, polyethylene, copolymers having an ethylene unit, polypropylene, copolymers having a propylene unit, other polyolefins, polyvinyl chloride, polyvinylidene chloride, polycarbonate resin, acrylic resin, methacrylic resin, polyester resin, polyacetal resin, and polyphenylene sulfide resin. These may be used singly or in combination of two or more thereof.

For the thermoplastic elastomer, a known thermoplastic elastomer may be appropriately selected according to the usage. Examples of the thermoplastic elastomer include styrene elastomer, vinyl chloride elastomer, olefin elastomer, urethane elastomer, polyester elastomer, nitrile elastomer, and polyamide elastomer.

A content of CFRP in the CFRP layer (B) is not particularly limited, but CFRP is preferably a main component (not less than 50 mass%). The content of CFRP is more preferably not less than 60 mass%, further preferably not less than 70 mass%, particularly preferably not less than 80 mass%, most preferably not less than 90 mass%, and may be not less than 95 mass% or 100 mass%.

Other Layer

The present multilayer structure may optionally have a layer other than the EVOH layer (A) and the CFRP layer (B). The other layer is not particularly limited, and examples thereof include a polyolefin resin layer containing polyolefin resin, a polyamide resin layer (aliphatic polyamide such as PA6 and PA66) containing polyamide resin, an elastomer layer containing an elastomer, and an adhesive resin layer containing an adhesive resin. A plurality of these layers may be provided, or may be used in combination.

The polyolefin resin contained in the polyolefin resin layer is not particularly limited, and examples thereof include: polypropylene; propylene copolymer in which propylene and an $\alpha$-olefin such as ethylene, 1-butene, 1-hexene, and 4-methyl-1-pentene are copolymerized; polyethylene such as low-density polyethylene, linear low-density polyethylene, medium-density polyethylene, and high-density polyethylene; ethylene copolymer in which ethylene and an $\alpha$-olefin such as 1-butene, 1-hexene, and 4-methyl-1-pentene are copolymerized; and poly(1-butene) and poly(4-methyl-1-pentene). These may be used singly, or two or more thereof having different copolymerizable component composition and physical properties may be mixed for use.

A content of the polyolefin resin contained in the polyolefin resin layer is not particularly limited, but the polyolefin resin is preferably a main component (not less than 50 mass%). The content of the polyolefin resin is more preferably not less than 60 mass%, further preferably not less than 70 mass%, particularly preferably not less than 80 mass%, most preferably not less than 90 mass%, and may be not less than 95 mass% or 100 mass%.

The polyamide resin contained in the polyamide resin layer is not particularly limited, and examples of common polyamide resins include homopolymers such as polycapramide (nylon 6), poly-$\omega$-aminononanoic acid (nylon 7), polyundecamide (nylon 11), and polylauryllactam (nylon 12). Examples of the copolymer polyamide resin include: aliphatic polyamides such as polyethylenediamine adipamide (nylon 26), polytetramethylene adipamide (nylon 46), polyhexamethylene adipamide (nylon 66), polyhexamethylene sebacamide (nylon 610), polyhexamethylene dodecamide (nylon 612), polyoctamethylene adipamide (nylon 86), polydecamethylene adipamide (nylon 108), caprolactam /

lauryllactam copolymer (nylon 6/12), caprolactam / ω-aminononanoic acid copolymer (nylon 6/9), caprolactam / hexamethylenediammonium adipate copolymer (nylon 6/66), lauryllactam / hexamethylenediammonium adipate copolymer (nylon 12/66), ethylenediamine adipamide / hexamethylenediammonium adipate copolymer (nylon 26/66), caprolactam / hexamethylenediammonium adipate / hexamethylenediammonium sebacate copolymer (nylon 66/610), and ethyleneammonium adipate / hexamethylenediammonium adipate / hexamethylenediammonium sebacate copolymer (nylon 6/66/610); aromatic polyamides such as polyhexamethylene isophthalamide, polyhexamethylene terephthalamide, polymetaxylene adipamide, hexamethylene isophthalamide / telephthalamide copolymer, poly-p-phenylene terephthalamide, and poly-p-phenylene-3,4'-diphenyl ether terephthalamide; amorphous polyamides; modified products in which these polyamide resins are modified with an aromatic amine such as methylenebenzylamine and metaxylenediamine; and metaxylylenediammonium adipate.

Alternatively, the polyamide resin may be terminal-modified polyamide resins, and preferably a terminal-modified polyamide resin. These polyamide resins may be used singly or in combination of two or more thereof.

A content of the polyamide resin contained in the polyamide resin layer is not particularly limited, but the polyamide resin is preferably a main component (not less than 50 mass%). The content of the polyamide resin is more preferably not less than 60 mass%, further preferably not less than 70 mass%, particularly preferably not less than 80 mass%, most preferably not less than 90 mass%, and may be not less than 95 mass% or 100 mass%.

The elastomer contained in the elastomer layer is not particularly limited. A known elastomer may be used, and appropriately selected according to a type of the layer to adhere. Examples thereof include thermoplastic elastomers and thermosetting elastomers. Examples of the thermoplastic elastomer include styrene elastomer, vinyl chloride elastomer, olefin elastomer, urethane elastomer, polyester elastomer, nitrile elastomer, and polyamide elastomer. Examples of the thermosetting elastomer include urethane rubber, silicone rubber, and fluorine rubber. These may be used singly, or two or more thereof having different copolymerizable component compositions and physical properties may be mixed for use.

A content of the elastomer contained in the elastomer layer is not particularly limited, but the elastomer is preferably a main component (not less than 50 mass%). The content of the elastomer is more preferably not less than 60 mass%, further preferably not less than 70 mass%, particularly preferably not less than 80 mass%, most preferably not less than 90 mass%, and may be not less than 95 mass% or 100 mass%.

The adhesive resin contained in the adhesive resin layer is not particularly limited. A known adhesive resin may be used, and appropriately selected according to a type of the layer to adhere. Representative examples thereof include modified polyolefin polymer having a carboxy group obtained by chemically bonding an unsaturated carboxylic acid or an anhydride thereof with an addition reaction, a graft reaction, etc. to a polyolefin resin. Examples of the adhesive resin include maleic-anhydride-grafted modified polyethylene, maleic-anhydride-grafted modified polypropylene, maleic-anhydride-grafted modified ethylene-propylene (block and random) copolymers, maleic-anhydride-grafted modified ethylene-ethyl acrylate copolymer, maleic-anhydride-grafted modified ethylene-vinyl acetate copolymer, maleic-anhydride-modified polycyclic olefin resin, and maleic-anhydride-grafted modified polyolefin resin. These may be used singly, or two or more thereof having different copolymerizable component composition and physical properties may be mixed for use.

A content of the adhesive resin contained in the adhesive resin layer is not particularly limited, but the adhesive resin is preferably a main component (not less than 50 mass%). The content of the adhesive resin is more preferably not less than 60 mass%, further preferably not less than 70 mass%, particularly preferably not less than 80 mass%, most preferably not less than 90 mass%, and may be not less than 95 mass% or 100 mass%.

## Multilayer Structure

The present multilayer structure has the EVOH layer (A) and the CFRP layer (B).

In the present multilayer structure, a plurality of the EVOH layers (A) or a plurality of the CFRP layers (B) may be provided.

Positions where the EVOH layer (A) and the CFRP layer (B) are provided are not particularly limited, but the EVOH layer (A) is preferably laminated onto at least one surface of the CFRP layer (B).

A damping property of the present multilayer structure is preferably not greater than 10, more preferably not greater than 9, and further preferably not greater than 8. This damping property is a value obtained by normalizing an acceleration of the multilayer structure after being hit with an impulse hammer with a maximum value of an exciting force read from the impulse hammer (acceleration / maximum exciting force), and calculating an average of amplitude heights in 50 to 200 ms after the hit.

The layer configuration of the present multilayer structure is not particularly limited, and examples of the layer configuration include EVOH layer (A) / CFRP layer (B), EVOH layer (A) / CFRP layer (B) / EVOH layer (A), CFRP layer (B) / EVOH layer (A) / CFRP layer (B), EVOH layer (A) / another layer / CFRP layer (B), another layer / EVOH layer (A) / CFRP layer (B) / EVOH layer (A) / CFRP layer (B) / another layer, polyolefin resin layer / adhesive resin layer / EVOH layer (A) / adhesive resin layer / polyolefin resin layer / CFRP layer (B), and elastomer layer / EVOH layer (A) / elastomer layer / CFRP layer (B).

In each layer of the present multilayer structure, optional additives (hereinafter, referred to as "other components") may be blended according to purposes within a range not considerably impairing the effect of the present disclosure. The other components may be used with only one type, or two or more types thereof may be used in combination with any combination and ratio.

Examples of the additives include a plasticizer, reinforcing agent, filler, pigment, dye, lubricant, oxidation inhibitor, antistat, UV absorber, thermal stabilizer, light stabilizer, surfactant, antibacterial agent, desiccant, anti-blocking agent, frame retardant, crosslinker, curing agent, foaming agent, and crystal nucleating agent. Contents of these additives in each layer of the present multilayer structure are typically not greater than 50 mass% in total, preferably not greater than 20 mass%, and more preferably not greater than 10 mass%.

## Method for Producing Multilayer Structure

The present multilayer structure is produced by laminating at least one EVOH layer (A) and at least one CFRP layer (B), and the producing method therefor is not particularly limited as long as these layers can be laminated. For example, the present multilayer structure is obtained by laminating a film or sheet of the EVOH, CFRP, and another layer as necessary, and applying heat and pressure to the laminate. As a method for applying heat and pressure, press forming, autoclave forming, vacuum forming, a sheet-winding method, an internal-pressure forming method, etc. may be used. When the present multilayer structure is produced so as to have the other layer, the EVOH layer (A) and the other layers may be laminated in advance and then laminated onto the CFRP layer (B), or the CFRP layer (B) and the EVOH layer (A) may be laminated and then the other layer is laminated.

The method for producing the multilayer structure preferably includes a step of laminating the EVOH layer (A) onto at least one surface of the CFRP layer (B).

The EVOH layer (A) and the other layer may be laminated by a known method. Examples thereof include: a method of melt-extruding laminating a resin etc. to constitute the other layer onto the EVOH film, sheet, etc.; a method of melt-extruding laminating the EVOH onto the other layer; a method of co-extruding EVOH and a resin etc. to constitute the other layer; a method of dry-laminating the EVOH layer (A) and the other layer by using a known adhesive such as an organotitanium compound, an isocyanate compound, a polyester compound, and a polyurethane compound; and a method of applying a solution of the EVOH on the other layer and then removing the solvent. Among these, the co-extruding method is preferable with considering the viewpoints of cost and environment.

A method for producing the film and sheet of the EVOH and the film or sheet of the resin etc. to constitute the other layer is not particularly limited, and any forming methods commonly applicable may be applied. Examples thereof include extrusion forming, blow forming, injection forming, and thermal forming. These films and sheets may be stretched such as monoaxial stretching or biaxial stretching and/or may be thermally fixed.

## Damping Material for CFRP

The EVOH layer (A) itself used for the present multilayer structure can be used as a damping material for CFRP. This can improve a damping property of CFRP.

Details of the EVOH layer (A) are as already described, and the description will be omitted.

## Usage

Since the present multilayer structure has the excellent damping property, the present multilayer structure is suitable for usage such as parts of aircrafts, automobiles (specifically, a roof material etc. of automobiles), marine crafts, and other various transportation devices, sports goods, leisure goods, etc.

## EXAMPLES

Hereinafter, the present disclosure will be further specifically described with Examples, but the present disclosure is not particularly limited to the following Examples without departing of the spirit of the present disclosure.

In Examples, "parts" means one on a mass basis.

Prior to Examples, the following materials were prepared.

(A1) Aliphatic polyester-modified EVOH: content of ethylene structural unit: 32 mol%, saponification degree: 99.8%, graft-modification rate: 6.9 mol%, Tg: 18°C
(A2) EVOH: content of ethylene structural unit: 51 mol%, saponification degree: 94.1%, Tg: 35°C
(A3) EVOH: content of ethylene structural unit: 32 mol%, saponification degree: 99.7%, Tg: 62°C
(B) CFRP (thermosetting prepreg) (available from Mitsubishi Chemical Corporation, trade name: TR3110 369GMP)

<Example 1>

(Production of Multilayer Structure)

The aliphatic polyester-modified EVOH (A1) was fed into a monoaxial extruder with φ 40 mm, and film formation was performed at an extrusion temperature of C1/C2/C3/C4/AD/D = 180/190/200/200/200°C to obtain an EVOH film with 200 μm in thickness.

The CFRP (thermosetting prepreg) (B) was cut with 287 mm in a warp direction and 200 mm in a weft direction, and laminated with 4 ply in the same direction. The obtained EVOH film with 200 μm in thickness was cut in a size of 200 mm × 287 mm, and laminated onto the laminated CFRP (thermosetting prepreg) (B).

<Example 2, Comparative Example 1, and Reference

Example 1>

Multilayer structures were produced in the same manner as in Example 1 except that the type of the EVOH was changed as described in Table 1.

<Evaluation of Adhesiveness to CFRP>

The multilayer structure was subjected to thermal press forming with a hydraulic heat-pressing machine under a condition at 150°C and 5 MPa for 5 min to obtain a thermally cured multilayer structure. Thereafter, the adhesiveness was evaluated with whether the EVOH layer was removable from the CFRP layer by hand. A case not removed was evaluated as "Very good", and a case removed was evaluated as "Poor".

<Evaluation of Damping Property>

The multilayer structure was placed in an autoclave, and a heating-pressurizing treatment was performed under the following condition to obtain a thermally cured multilayer structure. An acceleration sensor was attached at a center portion of the obtained multilayer structure, and the sample was hanged with a tube made with rubber. An impulse hammer having a sensor to convert a force to an electric signal at a tip was used to perform a hammering test. A damping property was evaluated by normalizing an acceleration of the multilayer structure after hit with an impulse hammer with a maximum value of an exciting force read from the impulse hammer (acceleration / maximum exciting force), and calculating an average of amplitude heights in 50 to 200 ms after the hit. A lower value thereof indicates more excellent damping property.

- Autoclave forming condition
- Pressure: 0.6 MPa
- Treatment temperature and time:

80°C - 30 min
130°C - 70 min

The following Table 1 shows the evaluation results of the multilayer structures of Examples 1 to 2, Comparative Example 1, and Reference Example 1.

[Table 1]

| | EVOH | Adhesiveness to CFRP | Damping property [$(m/s^2)/N$] |
|---|---|---|---|
| Example 1 | A1 | Very good | 5 |
| Example 2 | A2 | Very good | 7 |
| Comparative Example 1 | A3 | Poor | 12 |
| Reference Example 1 | - | - | 12 |

Examples 1 to 2, which used the EVOH having Tg within the range of the present disclosure, exhibited an improved damping property of the multilayer structure compared with Reference Example 1, which used no EVOH. Comparative Example 1, which used the EVOH having Tg out of the range of the present disclosure, exhibited poor

adhesiveness to CFRP compared with Examples 1 to 2 and did not improve the damping property.

Since the multilayer structures of Examples 1 to 2 have the excellent damping property as noted above, an automobile part and an aircraft part having this multilayer structure also have the excellent damping property.

The specific embodiments of the present disclosure have been described in the above Examples, but the Examples are merely examples, and not limitedly interpreted. It is anticipated that various modifications obvious to a person skilled in the art are within the scope of the present disclosure.

INDUSTRIAL APPLICABILITY

Since the multilayer structure of the present disclosure has the excellent damping property, the multilayer structure is suitable for usage such as parts of aircrafts, automobiles (specifically, a roof material etc. of automobiles), marine crafts, and other various transportation devices, sports goods, leisure goods, etc.

## Claims

**1.** A multilayer structure, comprising:

an ethylene-vinyl alcohol copolymer layer (A); and
a carbon-fiber-reinforced plastic layer (B),
wherein the ethylene-vinyl alcohol copolymer has a glass transition temperature (Tg) of 0 to 60°C.

**2.** The multilayer structure according to claim 1, wherein the glass transition temperature (Tg) of the ethylene-vinyl alcohol copolymer is 0 to 45°C.

**3.** The multilayer structure according to claim 1, wherein the glass transition temperature (Tg) of the ethylene-vinyl alcohol copolymer is 0 to 30°C.

**4.** The multilayer structure according to claim 1, wherein the ethylene-vinyl alcohol copolymer is a modified ethylene-vinyl alcohol copolymer having a structural unit represented by the following chemical formula (1),

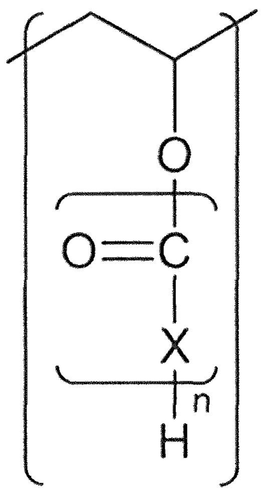

· · · (1)

wherein X represents an organic chain having a heteroatom, and "n" represents a positive integer.

**5.** The multilayer structure according to claim 4, wherein in the chemical formula (1), the heteroatom of X is an oxygen atom, a nitrogen atom, or a sulfur atom.

**6.** The multilayer structure according to claim 4, wherein in the chemical formula (1), "n" represents 1 to 20.

**7.** The multilayer structure according to claim 1, wherein the ethylene-vinyl alcohol copolymer layer (A) is laminated onto at least one surface of the carbon-fiber-reinforced plastic layer (B).

**8.** The multilayer structure according to any one of claims 1 to 7, wherein the multilayer structure is for an automobile part or an aircraft part.

**9.** A method for producing a multilayer structure, the method comprising:
laminating an ethylene-vinyl alcohol copolymer layer (A) onto at least one surface of a carbon-fiber-reinforced plastic layer (B).

**10.** An automobile part, comprising the multilayer structure according to any one of claims 1 to 7.

**11.** An aircraft part, comprising the multilayer structure according to any one of claims 1 to 7.

**12.** A damping material for a carbon-fiber-reinforced plastic, comprising an ethylene-vinyl alcohol copolymer layer, wherein the ethylene-vinyl alcohol copolymer has a glass transition temperature (Tg) of 0 to 60°C.

## INTERNATIONAL SEARCH REPORT

International application No.
**PCT/JP2023/035001**

**A. CLASSIFICATION OF SUBJECT MATTER**

***B32B 5/28***(2006.01)i; ***B32B 27/28***(2006.01)i
FI: B32B5/28; B32B27/28 102

According to International Patent Classification (IPC) or to both national classification and IPC

**B. FIELDS SEARCHED**

Minimum documentation searched (classification system followed by classification symbols)

B32B1/00-43/00; F16F15/00-15/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2011-011346 A (MITSUBISHI PLASTICS INC.) 20 January 2011 (2011-01-20) claim 1, paragraphs [0009], [0018], [0022] | 1-12 |
| Y | JP 2004-250461 A (SK KAKEN CO., LTD.) 09 September 2004 (2004-09-09) claims, paragraph [0003] | 1-12 |
| Y | JP 2005-007719 A (NIPPON STEEL CORP.) 13 January 2005 (2005-01-13) claims, paragraph [0029] | 1-12 |
| Y | WO 2021/192987 A1 (MITSUBISHI CHEMICAL CORP.) 30 September 2021 (2021-09-30) paragraph [0099] | 1-12 |
| Y | JP 2020-132078 A (THE YOKOHAMA RUBBER CO., LTD.) 31 August 2020 (2020-08-31) paragraph [0050] | 1-12 |
| A | JP 05-194924 A (TAOKA CHEM. CO., LTD.) 03 August 1993 (1993-08-03) claims, paragraphs [0028], [0029], examples | 1-12 |
| A | JP 2012-057658 A (NITTO DENKO CORP.) 22 March 2012 (2012-03-22) claims, paragraphs [0002], [0055] | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/035001**

| Patent document cited in search report | Publication date (day/month/year) | Patent family member(s) | Publication date (day/month/year) |
|---|---|---|---|
| JP 2011-011346 A | 20 January 2011 | (Family: none) | |
| JP 2004-250461 A | 09 September 2004 | (Family: none) | |
| JP 2005-007719 A | 13 January 2005 | (Family: none) | |
| WO 2021/192987 A1 | 30 September 2021 | US 2023/0023558 A1<br>paragraph [0136] | |
| JP 2020-132078 A | 31 August 2020 | (Family: none) | |
| JP 05-194924 A | 03 August 1993 | (Family: none) | |
| JP 2012-057658 A | 22 March 2012 | US 2013/0171898 A1<br>claims, paragraphs [0002], [0057] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022091178 A